# EUROPEAN PATENT APPLICATION

(11) **EP 1 715 425 A2**
(43) Date of publication of application: **25.10.2006**
(21) Application number: 05021972.4
(22) Date of filing: 08.10.2005
(51) Int. Cl.: G06F 11/14

(54) **Method and system for preserving access to a system in case of a disaster**

(30) Priority: 04.05.2005 CA 2506100; 28.07.2005 GB 0515579; 05.09.2005 GB 0518016; 14.04.2005 CA 2504070
(71) Applicant: Kapur, Rajesh, Maltby, Nr Rotherham S. Yorkshire S66 8QF (GB)
(72) Inventor: Kapur, Rajesh, Maltby, Nr Rotherham S. Yorkshire S66 8QF (GB)

(57) **Abstract**

A method and system for preserving access of a system in case of disaster having a primary filestore and a primary system database, comprising: a replica system having a replica filestore and a replica system database;
having a second empty filestore for recording all changes to the primary filestore; and
having at least one database trigger on each primary system table to save those data that uniquely identify the primary system by catching recording and transferring, reference data to the replica system database which has been inserted deleted and or been updated in the primary system table; and
at least one access preservation table for storing access preservation data; and
at least one transaction table being placed on the replica, and primary system for storing all transactions, and reference data on the basis of earliest recorded time; and
at least one database procedure to carry out asynchronously fast forward or rollback changes in the metadata and or filestore by using the transaction tables, access preservation tables and the second replica filestore.

## Description

The present invention relates to a method for preserving access to document data within a primary system by using a backup replica system in a offsite location. In the case of disaster to the primary system such as an earthquake, or in the simple case of corruption , the secondary replica system can be used.

In embodiments, the present invention relates to a method and system for producing a "real time" backup of a primary document management system able to recover from any eventuality.

Document management software is used in many large companies to provide a streamlined and efficient way of managing day to day business activities. The purpose of the software is to help companies keep track of large volumes of documents in an organised way. Thus, the documents can be easily stored, found and retrieved. In some cases, particularly in large companies, there may be more than one version of a particular document. In these circumstances, version control is an issue of particular importance. Version control is an aspect of most document management systems that enables different people to have shared access to a document. In addition to having shared access, the individuals have a right to individually modify the shared documents.

As an example, document management software may be used in a large engineering company that has many versions of the same part. When a part is ordered by a client, the correct part version needs to be found by the engineering company.

Document management systems typically include a system database associated with a filestore. The filestore stores actual document data while the system database stores reference information that points to the document within the filestore. The system database also typically stores supplementary document information regarding each document.

Documentum™ is an example of a document management system that comprises three different layers (or technologies) located on top of a server based operating system such as Unix™ or Windows 2000™, a system database, and a filestore.

The Documentum layers are located on top of a database and the layers serve Documentum client interfaces. The reference information (i.e. the information pointing to the physical document data) and the supplementary document information (i.e. the attributes of the types of the documents stored) are stored in the database. The actual physical data is stored in a filestore on either the server, a Storage Area Network (SAN) or filer pointed to by the server.

As part of the management of a document management system, the system database and filestore continue to grow in size. This is positive and desirable for the business as a whole as the company's data is kept safe. However, this poses large problems for system management as it is necessary to maintain and upgrade these vast systems. For example, each company needs to maintain the availability of these large systems, sometimes in the order of terabytes of data, in the event that a system fails. Currently, the best methods involve re-installing the database and document management software and recovering data from backup tapes and database exports. This sort of process may take days and is generally undesirable when attempting to a keep business going.

A present method of overcoming this problem involves writing a new system and migrating data across. With this method there is a risk associated to the current system. A more recent method involves creating a replicated server by storing document data within a system in a separate location. The document data is stored in a system filestore associated with a system database. The replicated server is built, upgraded and then the data is switched or toggled to the enable the new replica to become the production system. The data is copied from the filestore using a full backup/restore function on one night of the week to the secondary backup store. The following night, the primary production server is shutdown and incremental backup and database export is taken and these are applied to the secondary server. This step ensures the plurality of the data for the point in time when a switch could be made. While this is an improvement on the previous known methods, there is still the problem that the two systems are only synchronised for a brief moment in time.

It is an object of the present invention to provide a synchronous, and asynchronous backup and recovery system in case of disaster.

According to one aspect of the present invention, there is provided a method for preserving access of a system in case of disaster having a primary filestore and a primary system database, the method comprising the steps of:
creating a replica system having a replica filestore and a replica system database;
periodically copying data from the primary filestore to the replica filestore;
in response to a change to the primary filestore copying the said document stored to a secondary empty replica filestore.
in response to a change to the primary system database, making a corresponding change to the replica system database based on the time of earliest recorded data; and
in the event of complete failure of the primary system, using the changes and transaction information stored to the replica system database and second replica filestore to update the earlier copy of the replica filestore.

Another aspect of the present invention, there is provided a method for preserving access of a system in case of disaster having a primary filestore and a primary system database, the method comprising the steps of:
creating a replica system having a replica filestore and a replica system database;
periodically copying data from the primary filestore to the replica filestore;
in response to a change to the primary system database, making a corresponding change to the replica system database based on the time of earliest recorded data; and
in the event of complete failure of the primary system, using the changes and transaction information stored to the replica system database to rollback to the earlier copy of the replica filestore.

Another aspect of the present invention, there is provided a method for preserving access of a system in case of disaster having a primary filestore and a primary system database, the method comprising the steps of:
creating a replica system having a replica filestore and a replica system database;
periodically copying data from the primary filestore to the replica filestore;
in response to a change to the primary filestore copying the said document stored to a secondary empty replica filestore.
in response to a change to the primary system database, making a corresponding change to the replica system database based on the time of earliest recorded data; and
in the event of data corruption of the primary system, using the changes and transaction information stored to the replica system database and second replica filestore to rollback the replica system.

Another aspect of the present invention, provides a system for preserving access of a system in case of disaster having a primary filestore and a primary system database, comprising: a replica system having a replica filestore and a replica system database;
a second empty replica filestore for recording all changes to the primary filestore;
at least one set of three database triggers on each primary system table save those that uniquely identify the primary system on the network fabric for catching recording and transferring, reference data to the replica system database which has been inserted deleted and or been updated in the primary system table.
at least one set of access preservation tables for storing access preservation data;
at least one set of transaction tables one being placed on the replica, and primary system for storing all transactions, and reference data on the basis of earliest recorded time.
at least one database procedure to carry out asynchronously fast forward or rollback changes in the metadata and or filestore by using the transaction tables , access preservation tables and the second replica filestore.

According to further aspects of the present invention there is provided computer program code, optionally provided on a storage medium, which when loaded onto a computer will cause the computer to function as a system or in accordance with the method of any of the first to fourth aspects of the present invention or in accordance with the method or apparatus of any of the appended claims.

The invention has the advantages that it provides full and consistent recovery in case of total or partial loss of the primary system although a few transactions may be lost due to latency (time taken to transfer files across) i.e.. In other words there is little or no loss of data in this scenario as the replica system filestore can be rolled forward from the last snapshot to literally the last transaction. The user can chose partial recovery to rollback to the last backup if he so wishes. Also that in the case of corruption to the primary, system, the replica system can be consistently rolled back to any point in time at which the company deems, this is independent of snapshot time or backups although the company can decide to do this if they so wish. Another advantage is it requires the least amount of maintenance , disk space and constituent parts for the speedy recovery it provides. Finally, that users on the primary system are unaffected by this system.

Preferably, the primary system is operably connected to a network fabric. Preferably, the replica system is operably connected to a network fabric. Preferably, the primary system has information loaded onto it, and is based on the first server. Preferably, the replica system has information loaded onto it, and is based on a second server. Preferably, the first system and the replica system are configured to allow client computers operably connected to the network fabric to locate information owned by the first system and information owned by the replica system. Preferably, the replica system replicates the first system.

Preferably, the replica system is located in an off-site location. Preferably, the system comprises a Document Management System residing on a server (Unix or Windows 2000 server) comprising of a filestore storing the actual document data and a system database storing reference information pointing to the documents within a filestore, supplementary information on the document, together with system specific information. Preferably, the database of the replica system is configured to mirror the information in that of the first system's system database less a portion of the data which allows the replica system to be uniquely identified on the network fabric. Preferably, the filestore containing documents is connected to the network fabric. Preferably, the filestore is based on a Storage Area Network (SAN) or Filer connected to the network fabric. Preferably, the primary system's server can be connected to the filestore.

Preferably, the replica system's server can be connected to a separate filestore the replica filestore in this case would need to have incremental backups from the first filestore to be continuously applied to it throughout, perhaps at hourly intervals. Preferably, the incremental backup is done every hour and automatically applied to the replica filestore. Preferably, the replica system has a secondary initially empty filestore to store files copied over from the primary filestore that have changed, as. Preferably, the primary and replica system databases are linked through the network fabric. Preferably, the method comprises of using Oracle Database software linking primary and secondary system databases on the network fabric by means of an Oracle database link command. Preferably, in the case of a SQL Server database this link between primary and replica system databases is by a means of a SQL server linked server command. Preferably, both the primary and replica systems databases have the required access permissions to access, modify, insert or delete data in each other and are accessible to each other across the network fabric. Preferably, the method comprises document data being added to the filestore and reference data modified within system tables in the primary system database, and wherein the recording step comprises the step of recording reference data from all primary system tables, save those holding system specific data.

Preferably, the primary system, in response to a insert, update, delete command, inserts, updates, deletes reference data to each of the system tables affected for each particular transaction. Preferably, the recording step comprises recording the reference data using at least one database trigger. Preferably, the recording step comprises recording the reference data using three database triggers associated with each system table, excepting those tables, which allow the first system to be uniquely identified on the network fabric. Preferably, the method comprises adding a first database trigger associated with recording the changes after an insert command on each table, adding a second database trigger associated with recording the changes after an update command on each table and adding a third database trigger associated with recording the changes after a delete command on each database table, excepting those tables that define the primary system on the network fabric.

Preferably, the method comprises performing identical changes, to that which can occur after an insert, update, delete command on each primary system database table and are recorded within the respective database trigger pertaining to that particular transaction to the substantially identical replica system database table, by means of the salient SQL command contained within the three triggers on each of the primary database tables, the transfer, and application of the identical SQL command made possible only by the primary and replica database systems being linked through a database link on the network fabric. Preferably, the three triggers on each table in the primary database record the changes on update, insert, delete to access-preservation tables and a single transaction table for all changes on all tables. Preferably, the transfer is carried out within a second set of database triggers attached to the access preservation tables so as not to affect performance. Preferably, the single transaction table contains the group: the type of transaction (i.e. update, delete, Insert), the system table on which the transaction is performed, the primary key of the table, and a Date-timestamp. Preferably, the recording step comprises using at least one access-preservation table. Preferably, the recording step comprises using a set of three access preservation tables for each primary system table to be mirrored in the replica's database tables.

Preferably, the method additionally comprises using a database stored procedure to apply the changes and transactions recorded in the access-preservation tables and transaction table, to the replica system should the database link be severed for any reason including that of maintenance to the secondary system on a time based input parameter, once the database link is restored and user input is halted temporarily. Preferably, a set of database procedures can be used in contingency the database link is severed for any reason. To apply the changes and transactions recorded and in order, from the time the link was severed to the replica system in order to synchronise the two systems once the database link is restored again, user input to be halted at this point until the procedures have finished running . The system can then be returned to the said automated transfer using the SQL command within the triggers on each table, with the user input recommenced. Preferably, the access-preservation tables and the combined transaction table are stored on the replica server in case of failure of the first. Preferably, the set comprises a first access-preservation table to receive reference data recorded from the insert transaction on each system table, a second access-preservation table to receive reference data recorded from the update transaction on each system table, and a third access preservation table to receive reference data recorded from the delete transaction on each system table. Preferably, the method comprises input restriction until the primary and replica system databases are re-synchronised.

Preferably, the method comprises the contingency of applying the changes through at least a single database procedure using the combination transaction table and access-preservation tables, in order to resynchronise the primary and replica systems once the database link is restored. Preferably, the method, comprises using Documentum as the Document Management System for both the primary and replica system. Preferably the method comprises of using the primary system for the user community to store their documents. Preferably, the method comprises of using the secondary system as a disaster recovery system. Preferably, the method comprises document data being added to the filestore and reference data modified within Documentum system tables in the primary Oracle system database, and wherein the recording step comprises the step of recording reference data from all primary system tables, save those holding server specific data. Preferably, the replica system can be also used as a disaster recovery system in case of failure of the primary system.

Preferably, in the case of disaster the replica system can be used, the system is synchronised by applying the latest incremental filestore backup from the primary filestore and applying it to the replica filestore and accessing the transaction table and access-preservation tables, and second replica filestore to either back out or insert transactions to the point of recovery for the replica system database and replica system filestore. Preferably, the system comprises a Documentum document management system, and wherein the method is carried out additionally it is appreciated that the secondary server be used as a "Standby" this is comprehended by this invention but is not the primary purpose. Preferably, the recording, inserting, updating, deleting and providing steps and standard database constructs are executed by the execution of Oracle database software code. Preferably, the recording, inserting, updating, deleting and providing steps and standard database constructs are executed by the execution of SQL Server database software code.

Embodiments of the invention will hereinafter be described, with reference to the accompanying drawing, in which:

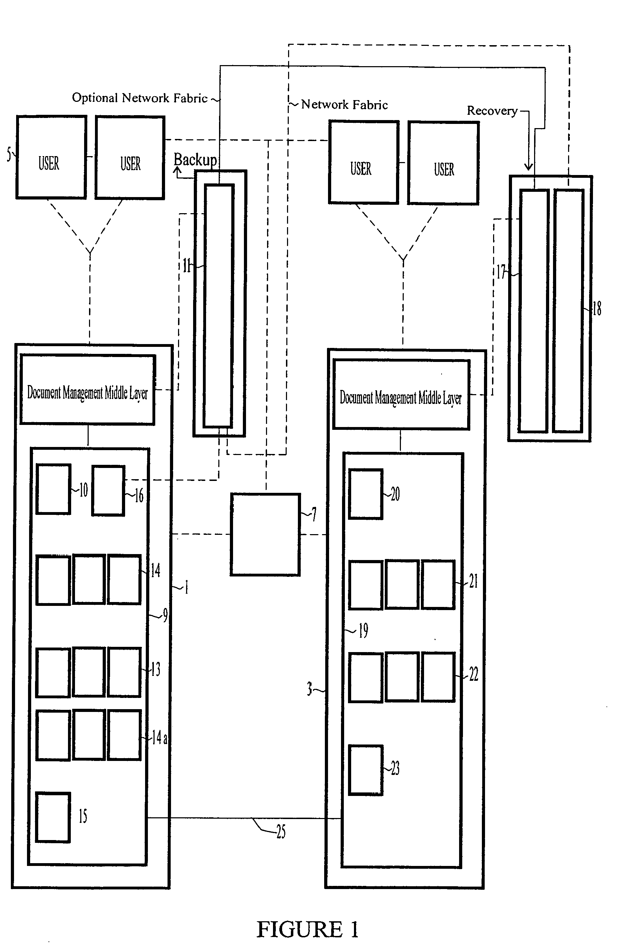

Figure 1 shows a disaster recovery system having a primary system and a replica system.
Figure 1 shows a disaster recovery system having a primary system 1 and a replica system 3. The primary system is connected to a network of users 5 by means of network server 7.

The primary system 1 is made up of a system database 9 including a number of system tables 10 and a filestore 11. The actual physical data, i.e. the document data files themselves are stored in the filestore 11, in this case shown as a storage area network (SAN). Reference information about the data stored in the filestore, i.e. information pointing to the physical document data and supplementary document information, i.e. the attributes of the types of documents stored are stored in the system database 9. The data sent to the system tables 10 is in the form of Metadata.

As is known from conventional databases and document management systems, metadata contains information sufficient to enable a system to identify each file stored in the filestore 11 sufficiently to enable authorised personnel to retrieve, protect and carry out the disposition of the files in the filestore 11. This information may include items such as: place of origin, file code/identification, key words for retrieval etc. Each time a file is edited, metadata is generated. The metadata is used to update information in the system tables 10 corresponding to the file held in the system filestore 11. Therefore, if a document is added, updated or deleted, the metadata will provide information of this to the system database of the primary system 9 to track the changes to be made to the filestore, and any metadata associated with those files.

The system database shown comprises a system table 10 (which represents one table of many that is inserted, updated or deleted from not being one which uniquely identifies the primary system on the network from the replica system), access preservation tables 13, procedure 16, sets of database triggers 14 each containing three database triggers, e.g. update, delete and insert, and a transaction table 15.

The replica system comprises a replica filestore 17, a secondary empty filestore 18, to receive copies of files inserted , deleted and updated. Again these are shown to be on a storage area network (SAN), coupled to a replica system 3. The filestore 11, of the primary system 9 and the replica filestores 17,18 are connected, optionally across a network fabric, a link that enables a backup to be made of the contents of the filestore 11 of the primary system to the replica filestore 17 at periodic intervals say hourly. The backup may be taken as a snapshot or on an incremental basis. By backup (incremental, snapshot) a copy of the primary system filestore 11 at that point in time, is taken and this can be applied to the primary filestore 17 of the replica system. The primary and replica system databases are connected by a database link 25.

Like the primary system database 9, the replica system database 19 comprises system table 20 which corresponds to the system table 10 of the primary (and merely represents one system table of many, access preservation tables 21, procedures 22 to carry out the asynchronous updates and or rollback required by using the information contained within the access preservation tables 21, and the transaction table 23 together with up to date file information, contained within the secondary filestore 18.

Every time a change is made to the system database 9 of the primary system 1, a corresponding change is made to the system database 19 of the replica system. Thus, if a document is updated, the metadata that is sent to the system database to fire the "update" of tables 10 is caught in the "update" trigger and is stored with a timestamp in both sets of access preservation tables 13 and 14 whilst being recorded in transaction tables 15 and 23 is also copied to the corresponding system database tables 20 of the replica system using triggers 14. The deleted and inserted file written to the filestore 11 are captured and added to the second filestore in the replica system by means of a procedure 16 calling a operating system copy command This only happens when a user has finished working on a document locally. From time to time a copy of the primary filestore 11 is applied the replica filestore 17 through conventional means (i.e. by taking a snapshot and applying it).

Therefore, when a user adds, deletes or amends a document or information held against a document, in the document management system, the document management system splits the data entered by the user down into its constituent parts including the data files and metadata relating to the files. The metadata part, that performs the functions of update, insert or delete of the data, is written to tables 10 within the database (known as the system tables) by either adding a new row or updating data in an existing row within the system tables or deleting a row from the tables. The system tables 10, 20 are originally added by the document management system to the database of choice on installation.

The physical data is added to or deleted from the filestore 11.

Within each trigger 14 on each table 10 , 13 is code that automatically executes to make exactly the same change in the replica system database 19 as when the change is made in the system database 9 of the primary system, preferably, however, the code to transfer the changes is placed in a second set of triggers 14a which fire when the first set 14 record the transaction to the access preservation tables. This is in response to any operation formed on a file in the primary system. In other words, to insert, update or delete a document. The corresponding tables 20 in the replica system 3 are thus updated as and when the tables 10 in the primary system are updated, save those that uniquely identify the primary and secondary system upon the network.

The triggers contain code within them to fill preferably, three access preservation tables 13 on the primary database 9, for each system table 10. When a document is inserted, a row is added to the access preservation table for inserts for that table. Similarly, when a document is deleted, the access preservation table for delete for that table is added to. On update, preferably, but is not necessarily all three access preservation tables for that table are updated in this case there will be no update trigger on the update preservation table as a update is covered by a delete and insert transaction. Each row has a recorded timestamp against it. The procedure will also be activated thus providing an up-to-date record of the content of the corresponding files in the second filestore of the replica.

At the time that the data is stored on the primary database 9 and in the access preservation tables 13, each transaction carried out on any of the required system tables is also stored within a database transaction table 15. The data stored in the database transaction table includes, but is not limited to, the following information: the date-timestamp (that was recorded in the access preservation table); the type of transaction; the system table 10 in which the change occurred; and the primary key of the row being updated.

Again, at the time the information in the primary database system is updated, the same triggers also update the same information in the set of preservation tables 21 and transaction table 23 in the replica database system 24.

Should the link 25, between the primary and replica systems break, the information stored in the transaction tables of the primary and replica database 15 and 23 may be used to update metadata, and copy files to be stored in the replica filestore 18. In this respect, any changes that took place to documents in the primary filestore since the breakage of link are transfered to the replica filestore 18, and should be saved in the transaction table of the replica database system by means of procedures 22. Therefore, the data stored in the transaction table of the, primary, and replica systems may be used to update the documents saved in the replica filestore to a time just prior to breakage of the link. Thus, if user input to the primary system is stopped at the time the link breaks, then the replica system can be synchronised to remain fully up-to-date with the primary system. Snapshots would take care of any updates to the primary replica filestore 17 that were necessary.

Similarly, in the event of failure of the primary system, or should the primary system become corrupt, it would be possible to update documents held in the replica filestore 17 since the last backup of the primary filestore using information held in the transaction table of the replica database system , access preservation tables 21, and secondary filestore 18. In these circumstances, once the documents in the replica filestore have been updated, all information held in the replica system may be copied across to the primary system.

Thus, by the above described methods, it is possible to have a real time backup of the primary system.

The replica system shown should ideally be housed in an offsite location so that any damage caused to the primary system resulting from electrical or other problems would not affect the backup on the replica system.

Additionally, if the primary was to become corrupt, even though the corruption would be passed to the replica, it follows that all the information is recorded and available to reverse out these changes to any point in time.

If a company did not wished to have an even lesser window of recovery the metadata could just be rolled back to the time of the last backup.

An example is shown below of code which may be extended to implement the invention. The code shown is not complete but should demonstrate part of the method. Code is given for Oracle only, although all database systems of choice comply to the Sequel standard so what construct is available in one should be available in the other. One system table is taken dm_sysobject_r as example from the Documentum system though not all the columns are used for the example to merely show the concept of the three trigger a table system that is embodied by this invention. The concept is however explained.
Oracle
Create Database link link_name
Connect to username Identified by password
Using sqlnet_string;
e.g.
Create Database link Secondary
connect to secondary identified by secondary
using 'backup_database'

It is appreciated that in the case of an Oracle delete trigger, a before or after trigger can be used.
Create or replace trigger keep_del_r_trigger
before delete on dm_sysobject_r
for each row
Begin
delete from dm_sysobject_r@backup_database where r_object_id = :old.r_object_id Insert into keep_r_table value@backup_database
(:old.r_object_id,:old.r-version-label,:old.i-folder-id,:SYSDATE);
Insert into transaction_table@backup_database
('Delete','dm_sysobject_r',:old.r_object_id, SYSDATE);
EXCEPTION
when others then
RAISE;
END;
/
The first command of the above trigger shows the SQL command and the "after delete row" trigger on the primary database automatically deletes the row in the secondary table. The insert statement is necessary in case the link is severed which can happen from time to time in case of maintenance, or in case of failure. As the above Oracle code shows this can be used in order to preserve the data in access preservation tables and the transaction table. In this case instead of using the link to transfer the necessary commands; the access- preservation tables and transaction table are used instead at a later point by database procedures that can run in the transactions in sequence to the replica database. The triggers and procedures being "Enabled" in the secondary.
Create or replace trigger keep_ins_r_trigger
after insert on dm_sysobject_r
for each row
Begin
insert into
dm_sysobject_r@backup_database(:new.r_object_id,:new.r_version_label,:new.i_folder_ id)
Insert into keep_r_table value@backup_database
(:new.r_object_id,:new.r_version_label,:new.i_folder_id:,SYSDATE);
Insert into transaction_table@backup_database
('Insert','dm_sysobject_r',:new.r_object_id, SYSDATE);
EXCEPTION
when others then
RAISE;
END;
/
The new values are used meaning the values after the insert or update of a row and these are subsequently used to apply changes to the secondary database.
Create or replace trigger keep_upd_r_trigger
after update on dm_sysobject_r
for each row
Begin
update dm_sysobject_r@backup_database set r_version_label = :new.r_version_label, i_folder_id = :new.i_folder_id where r_object_id = :new.r_object_id,
Insert into keep_r_table value@backup_database
(:new.r_object_id,:new.r_version_label,:new.i_folder_id:,SYSDATE);
Insert into transaction_table@backup_database
('Update','dm_sysobject_r',:old.r_object_id, SYSDATE);
EXCEPTION
when others then
RAISE;
END;
/
In the case of the dm_sysobject_r table above an example has been given of how the three triggers record the transactions for that table. This can be extended to every table within the system. A "before row delete" is used in the example, meaning the data the is about to be deleted is captured the :old values meaning whatever was there previously is
always captured.

A "after row insert" and "after row update" is preferably used, meaning that the data values of the row that have been, inserted or updated are actually captured notice the new values inserted are always used. On a "before insert "old values do not exist. This ensures that all salient and/or relevant information is captured.

It will be appreciated that an "after row delete" and "before row update / insert" could also be used and are comprehended by the invention. In such a case, the old values are captured immediately upon the deletion and the new values upon update and insert.

An oracle database procedure or stored procedure is a piece of oracle execution code and carries out logical instructions. An oracle trigger is a piece of application code that can be applied to an oracle "table" (a storage unit like a filling cabinet) which when particular transactions are carried out on the table it fires automatically to execute the code within it.

It will be appreciated that variations in, and modifications to the embodiments as described and illustrated may be made within the scope of this application.

## Claims

**1.** A method for preserving access of a system in case of disaster having a primary filestore and a primary system database, the method comprising the steps of:
creating a replica system having a replica filestore and a replica system database;
periodically copying data from the primary filestore to the replica filestore;
in response to a change to the primary filestore copying the said document stored to a secondary empty replica filestore.
in response to a change to the primary system database, making a corresponding change to the replica system database based on the time of earliest recorded data; and
in the event of complete failure of the primary system, using the changes and transaction information stored to the replica system database and second replica filestore to update the earlier copy of the replica filestore.

**2.** A method as claimed in Claim 1, for preserving access of a system in case of disaster having a primary filestore and a primary system database, the method comprising the steps of:
creating a replica system having a replica filestore and a replica system database;
periodically copying data from the primary filestore to the replica filestore;
in response to a change to the primary system database, making a corresponding change to the replica system database based on the time of earliest recorded data; and
in the event of complete failure of the primary system, using the changes and transaction information stored to the replica system database to rollback to the earlier copy of the replica filestore:

**3.** A method as claimed in 1 and 2, for preserving access of a system in case of disaster having a primary filestore and a primary system database, the method comprising the steps of:
creating a replica system having a replica filestore and a replica system database;
periodically copying data from the primary filestore to the replica filestore;
in response to a change to the primary filestore copying the said document stored to a secondary empty replica filestore.
in response to a change to the primary system database, making a corresponding change to the replica system database based on the time of earliest recorded data; and
in the event of data corruption of the primary system, using the changes and transaction information stored to the replica system database and second replica filestore to rollback the replica system to a point prior to the corruption.

**4.** A method according to claim 1 to 3 comprising creating a replica system having a replica filestore and a replica system database and having a separate secondary replica filestore.

**5.** A method according to claim 4, wherein the primary system database is arranged to have at least one system table, and the step of making a corresponding change to the replica system database in response to a change to the primary system database comprises:
in response to a change to the at least one system table, making a corresponding change to a corresponding system table located in the replica system database.

**7.** A system for preserving access of a system in case of disaster having a primary filestore and a primary system database, comprising: a replica system having a replica filestore and a replica system database;
having a second empty filestore for recording all changes to the primary filestore; and having at least one database trigger on each primary system table save those that uniquely identify the primary system on the network fabric for catching recording and transferring, reference data to the replica system database which has been inserted deleted and or been updated in the primary system table; and
at least one access preservation table for storing access preservation data; and
at least one transaction table one being placed on the replica, and primary system for storing all transactions, and reference data on the basis of earliest recorded time; and
at least one database procedure to carry out asynchronously fast forward or rollback changes in the metadata and or filestore by using the transaction tables , access preservation tables and the second replica filestore and;
at least one second replica filestore or storage media for storing individual files inserted deleted and updated on the primary filestore being supplied by the at least one database procedure.

**8.** A document recovery system for connection to a document management system having a primary system having a primary filestore and a primary system database, the document recovery system comprising a replica filestore and a replica system database
the document recovery system being arranged to periodically receive copied data from the primary filestore and database being arranged such that in response to total failure of the the primary system a change is made to the replica system whereby in the event of failure of the primary system or of a link between the primary and replica system, the document recovery system is controlled to change the replica system to become the primary.

**9.** A document management system, the document management system comprising: A document recovery system for connection to a document management system having a primary system having a primary filestore and a primary system database, the document recovery system comprising a replica filestore and a replica system database
the document recovery system being arranged to periodically receive copied data from the primary filestore and database being arranged such that in response to total failure of the the primary system a change is made to the replica system whereby in the event of failure of the primary system or of a link between the primary and replica system, the document recovery system is controlled to change the replica system to become the primary.

**10.** A method for preserving access to document data within a system in a separate location, wherein said document data is stored in a system filestore associated with a system database, the system database containing reference data to point to the document data within the system filestore, in case of disaster to the primary system such as, earthquake, the secondary system can be used, the method comprising steps of:
creating a replicated server containing the system database and filestore;
determining that a insert, update, delete command has been issued within the primary production system database upon its system tables excepting those containing reference information that uniquely identifies the production system database from its replica on the network fabric;
transferring and recording the commands above to the database system tables of the replica based on time of earliest recorded data; and
transferring recorded document data to the replica filestore using incremental primary filestore backup restores; and
transferring and recording files as inserted,deleted or updated to the second replica filestore and or to storage media.
